**Europäisches Patentamt**

(19) **European Patent Office**

**Office européen des brevets**

(11) Numéro de publication· **0 052 561**
**B1**

(12) FASCICULE DE BREVET EUROPEEN

(45) Date de publication du fascicule du brevet:
08.08.84

(21) Numéro de dépôt: 81401777.8

(22) Date de dépôt: 10.11.81

(51) Int. Cl.³: **C 08 F 279/02,** C 08 F 257/02,
D 21 H 1/28 // (C08F279/02,
230/02),(C08F257/02, 230/02)

(54) Latex d'interpolymère et procédé de préparation.

(30) Priorité: 19.11.80 FR 8024516

(43) Date de publication de la demande.
26.05.82 Bulletin 82/21

(45) Mention de la délivrance du brevet:
08.08.84 Bulletin 84/32

(84) Etats contractants désignés:
AT BE CH DE FR GB IT LI LU NL SE

(56) Documents cités:
US - A - 3 224 908
US - A - 3 255 276

(73) Titulaire **RHONE-POULENC SPECIALITES CHIMIQUES,**
**"Les Miroirs" 18, Avenue d'Alsace, F-92400 Courbevoie**
**(FR)**

(72) Inventeur: **Chauvel, Bernard, 24, Chemin de la**
**Commanderie, F-95120 Ermont (FR)**

(74) Mandataire: **Fabre, Madeleine-France et al,**
**RHONE-POULENC RECHERCHES Service Brevets**
**Chimie et Polymères 25, quai Paul Doumer,**
**F-92408 Courbevoie Cedex (FR)**

0 052 561

## Description

La présente invention concerne des latex d'interpolymère utilisables notamment comme liants. Elle concerne également un procédé de préparation desbits latex.

Le brevet américain n° 3 255 276 décrit un interpolymère constitué d'un copolymère de butadiène et de styrène et d'un polymère de l'acide vinylphosphonique ou de l'hemi-ester alkylique de cet acide, lequel polymère est au moins en partie greffé sur le copolymère de butadiène et de styrène. Cependant, ces interpolymères dans leur application comme liant dans des compositions aqueuses pour le couchage du papier, ne confèrent pas aux papiers couchés une résistance à l'arrachage humide adéquate, ce qui est pourtant nécessaire pour les papiers utilisés notamment, en impression offset.

La présente invention a pour but de remédier à cet inconvénient tout en permettant l'obtention d'un interpolymère sous forme de latex ayant des propriétés liantes améliorées, convenant bien au couchage du papier auquel il confère une résistance à l'arrachage humide (IGT humide) très satisfaisante.

Les latex, conformément à l'invention, sont des dispersions aqueuses de particules de diamètre compris essentiellement entre 0,1 et 1 µm d'un interpolymère composé d'un copolymère A de butadiène, de styrène et d'au moins un acide carboxylique insaturé éthylénique et d'un polymère B de bis(2-chloroéthyl)vinylphosphonate au moins en partie greffé sur le copolymère A.

A titre préférentiel l'interpolymère est composé de 80 à 99%en poids de copolymère A et de 20 à 1% en poids de polymère B.

A titre également préférentiel le copolymère A comprend en poids 25 à 55% de butadiène, 35 à 74% de styrène et 1 à 10% d'au moins un acide carboxylique insaturé éthylénique.

A titre également préférentiel le polymère B comprend en poids 15 à 100% de bis(2-chloroéthyl)vinylphosphonate et 0 à 85% d'au moins un composé insaturé éthylénique copolymérisable avec le bis(2-chloroéthyl)vinylphosphonate.

A titre également préférentiel la partie de l'interpolymère insoluble dans l'alcool isopropylique représente au moins 75% de l'interpolymère et comprend, à l'état greffé, 0,2 à 15% en poids de bis(2-chloroéthyl)vinylphosphonate.

La teneur pondérale en matières sèches des latex objet de l'invention est généralement comprise entre 1 et 70% et de préférence entre 30 et 55%.

Parmi les acides carboxyliques insaturés éthyléniques entrant dans a composition du copolymère A on peut citer notamment l'acide acrylique, l'acide méthacrylique, l'acide itaconique, l'acide maléique et l'acide fumarique.

Comme composés copolymérisables avec le bis(2-chloroéthyl)vinylphosphonate on peut citer notamment les composés vinylaromatiques, les halogénures de vinyle, les halogénures de vinylidène, les composés diéniques, les esters vinyliques d'acide carboxylique, les composés acryliques. On peut citer plus particulièrement le styrène, l'$\alpha$-méthylstyrène, le paratertiobutylstyrène, le chlorostyrène, le vinyltoluène, le chlorure de vinyle, le bromure de vionyle, le fluorure de vinyle, le chlorure de vinylidène, le butadiène, l'isoprène, le chloroprène, l'acide acrylique, l'acide méthacrylique, l'acrylamide, le méthacrylamide, le nitrile acrylique, le nitrile méthacrylique, le chloroacrylonitrile, l'acétate de vinyle, les esters de l'acide acrylique tels que l'acrylate de méthyle, l'acrylate d'éthyle, l'acrylate d'hydroxyéthyle, l'acrylate d'hydroxypropyle, l'acrylate de n-butyle, l'acrylate d'isobutyle, les esters de l'acide méthacrylique tels que le méthacrylate de méthyle, le méthacrylate d'éthyle, le méthacrylate d'hydroxyéthyle, le méthacrylate d'h/droxypropyle, le méthacrylate de n-butyle, le méthacrylate d'isobutyle.

Le procédé d'obtention des latex selon l'invention consiste à préparer un latex de copolymère A par polymérisation en émulsion de butadiène, de styrène et d'au moins un acide carboxylique insaturé éthylénique, puis à polymériser, en présence du latex de copolymère A, du bis(2-chloroéthyl)vinylphosphonate et éventuellement au moins un composé insaturé éthylénique copolymérisable avec le bis(2-chloroéthyl)vinylphosphonate.

Le latex de copolymère A est préparé de façon en soi connue par polymérisation en émulsion aqueuse de butadiène, de styrène et d'au moins un acide carboxylique insaturé éthylénique, en présence d'au moins un initiateur et d'au moins un agent émulsifiant avec une concentration en mélange de monomères dans le milieu réactionnel comprise généralement entre 20 et 60% en poids.

Le butadiène représente généralement entre 15 et 85% et de préférence entre 25 et 55% en poids du total des monomères à polymériser.

Le styrène représente généralement entre 5 et 84% et de préférence entre 35 et 74% en poids du total des monomères à polymériser.

La quantité d'acide carboxylique mis en ouevre est généralement comprise entre 1 et 10% en poids par rapport au total des monomères à polymériser.

Les monomères mis en oeuvre peuvent être introduits en mélange ou séparément et simultanément dans le milieu réactionnel, soit avant le début de la polymérisation en une seule fois, soit au cours de la polymérisation par fractions successives ou en continu.

En tant qu'agent émulsifiant on met en oeuvre les agents anioniques classiques représentés notamment par les sels d'acides gras, les alkylsulfates, les alkylsulfonates, les arylsulfates, les arylsulfonates les alkylarylsulfates, les alkylarylsulfonates, les sulfosuccinates, les alkylphosphates de métaux alcalins, les sels de l'acide abiétique hydrogénés ou non. Ils sont employés à raison de 0,01 à 5% en poids par rapport au total des monomères.

L'initiateur, qui est hydrosoluble, est représenté plus particulièrement par les hydroperoxydes tels que l'eau oxygénée, l'hydroperoxyde de cumène, l'hydroperoxyde de diisopropylbenzène, l'hydroperoxyde de paramenthane, et par les persulfates tels que le persulfate de sodium, le persulfate de potassium, le persulfate d'ammonium. Il est employé en quantités comprises entre 0,05 et 2% en poids par raport au total des monomères. Ces initiateurs sont éventuellement associés à un réducteur, comme par exemple le bisulfite ou le formaldéhydesulfoxylate de sodium, les polyéthylèneamines, les sucres: dextrose, saccharose, les sels métalliques. Les quantités de réducteur utilisées varient de 0 à 3% en poids par rapport au total des monomères.

La température de réaction fonction de l'initiateur mis en œuvre, est généralement comprise entre 0 et 110°C et de préférence entre 25 et 90°C.

La polymérisation du bis(2-chloroéthyl)vinylphosphonate, et éventuellement d'un composé copolymérisable avec le bis(2-chloroéthyl)vinylphosphonate, en présence du copolymère A est effectuée en émulsion aqueuse en présence ou non d'un agent émulsifiant, d'un initiateur de polymérisation et éventuellement d'un agent de transfert avec une concentration du total copolymère A + monomère(s) dans le milieu réactionnel comprise entre 20 et 70% en poids.

La quantité de latex de copolymère A mis en œuvre est telle que le copolymère A représente généralement 80 à 99% en poids du total copolymère A + monomère(s).

L'initiateur, identique à ou différent de celui mis en œuvre pour la préparation du copolymère A, est choisi parmi les inititeurs mentionnés plus haut. Il est employé en quantités comprises entre 0,05 et 6% en poids par raport au(x) monomère(s).

L'agent émulsifiant présent dans le latex de copolymère A est généralement suffisant pour maintenir la stabilité de l'émulsion au cours de la polymérisation. Cependant, dans certains cas, il peut être utile d'ajouter un supplément d'agent émulsifiant identique à ou différent de celui utilisé pour la préparation du copolymère A. Cet agent émulsifiant est choisi dans la liste donnée précédemment. Il est introduit à raison de 0 à 2,5% en poids par rapport au total copolymère A + monomère(s).

L'agent de transfert mis en œuvre dans des proportions allant de 0 à 3% en poids par rapport au(x) monomère(s) est généralement choisi parmi les mercaptans tels que le N-dodécylmercaptan, le tertiododécylmercaptan; le cyclohexène; les hydrocarbures halogénés tels que le chloroforme, le bromoforme, le tétrachlorure de carbone. Il permet de régler la proportion de polymère greffé et la longueur des chaînes moléculaires greffées. Il est ajouté au milieu réactionnel soit avant la polymérisation, soit en cours de polymérisation.

La température de réaction, fonction du monomère copolymérisable avec le bis(2-chloroéthyl)vinylphosphonate et de l'initiateur mis en œuvre, est généralement comprise entre 0 et 110°C et de préférence entre 25 et 90°C.

Les latex selon l'invention sont utilisables notamment comme liants pour la préparation des compositions aqueuses pour couchage du papier et plus particulièrement du papier impression offset.

On sait que les compositions aqueuses pour couchage du papier contiennent en principe des pigments et des liants. Le pigment le plus couramment utilisé est l'argile minérale. On peut également utiliser, en faible proportion par rapport à l'argile minérale, d'autres pigments tels que du carbonate de calcium, de l'oxyde de titane, du blanc satin, de l'hydrargillite, du talc, du sulfate de baryum. Ces pigments sont mis en dispersion dans l'eau, généralement en milieu alcalin et en présence d'agents dispersants dont les plus importants sont le pyrophosphate tétrasodique, l'hexamétaphosphate de sodium, les polyacrylates de bas poids moléculaire à de taux compris entre 0,2 et 0,5% en poids par rapport aux pigments. Ces pigments sont fixés au papier par l'intermédiaire de liants. On a déjà proposé, comme liants pour cette application, des latex aqueux d'un polymère synthétique tel qu'un copolymère de butadiène et de styrène, un copolymère carboxylé de butadiène et de styrène, un polymère acrylique ou un polymère d'acétate de vinyle, employés soit seuls soit en mélange avec des liants naturels tels qu'amidons, protéines, caséine ou synthétiques tels que les alcools polyvinyliques. Une catégorie de liants synthétiques particulièrement intéressante est constituée par les latex de copolymères carboxylés de butadiène et de styrène comprenant en poids 30 à 50% de butadiène, 40 à 68% de styrène et 2 à 10% d'au moins un acide carboxylique insaturé éthylénique. Il est également possible d'associer aux latex des produits capables d'améliorer les propriétés de rétention d'eau des compositions de couchage tels que des carboxyméthylcellulose ou des alginates.

Les compositions de couchage peuvent contenir enfin d'autres ingrédients divers tels que notamment des agents de réticulation, des agents antimousses, des agents glissants, des azurants optiques.

Le couchage du papier à l'aide des compositions aqueuses est réalisé au moyen d'une machine à coucher selon diverses techniques mettant en œuvre divers dispositifs parmi lesquels on peut citer ceux connus industriellement sous les appellations suivantes: la lame d'air, la size press, la coucheuse Champion, la coucheuse Massey, la racle traînante. Après couchage le papier subit une opération de séchage suivie généralement d'une opération de calandrage.

Parmi les propriétés que doit posséder le papier couché pour impression offset la résistance à l'arrachage humide présente une importance particulière. Le procédé d'impression offset, qui est basé sur la répulsion de l'eau par les encres grasses, emploie en fait de l'eau. En impression offset quadrichromique on est par suite amené à imprimer la deuxième, la troisième ou quatrième couleur à

0 052 561

un endroit préalablement mouillé. Il importe donc, pour éviter les phénomènes d'arrachage à l'état humide, que se traduisent par un encrassement du blanchet et des presses offset, que le papier possède une résistance à l'arrachage humide suffisante.

Les latex selon l'invention conduisent à un papier couché de résistance à l'arrachage humide plus élevée que les latex des copolymères A correspondants.

Les latex selon l'invention sont également utilisables comme liants dans l'industrie textile, en particulier pour la fabrication des nontissés.

Les exemples 1 à 11 qui suivent, dans lesquels les parties sont indiquées en poids, sont destinés à illustrer l'invention.

Exemples 1 à 11

Préparation du copolymère A

Dans un autoclave en acier inoxydable, muni d'un agitateur, on introduit le nombre de parties de butadiène et de styrène indiqué, pour chaque exemple, dans le tableau 1.

Tableau 1

|  | Exemple 1 | Exemple 2 | Exemples 3 à 9 | Exemples 10 et 11 |
|---|---|---|---|---|
| Butadiène | 27 | 40 | 43 | 50 |
| Styrène | 69 | 56 | 53 | 46 |

On introduit également:

— 100 parties d'eau désionisée,
— 2 parties d'acide acrylique,
— 2 parties d'acide itaconique,
— 0,5 partie de laurylsulfate de sodium,
— 0,8 partie de persulfate d'ammonium.

On chauffe le mélange réactionnel à 75°C et maintient cette température pendant la durée de la réaction. Après 10 heures de réaction le taux de transformation est de l'ordre de 98%. On dégaze le butadiène qui n'a pas réagi. Les particules du latex obtenu ont un diamètre d'environ 0,15 µm et une composition sensiblement équivalente à celle des produits mis en œuvre.

Polymérisation en présence du copolymère A

Dans un autoclave en acier inoxydable, muni d'un agitateur, on introduit le nombre de parties de copolymère A (sous forme du latex correspondant préparé précédemment), de bis(2-chloroéthyl)vinylphosphonate et éventuellement de méthacrylate de méthyle indiqué, pour chaque exemple, dans le tableau 2.

4

Tableau 2

| Exemple | Copolymère A | Bis(2-chloroéthyl)vinyl-phosphonate | Méthacry-late de méthyle | Persulfate d'ammonium |
|---------|--------------|-------------------------------------|--------------------------|------------------------|
| 1 | 97 | 3 | --- | 0,12 |
| 2 | 95 | 5 | — | 0,20 |
| 3 | 98 | 2 | — | 0,08 |
| 4 | 97 | 3 | — | 0,12 |
| 5 | 96 | 4 | — | 0,16 |
| 6 | 95 | 5 | — | 0,20 |
| 7 | 90 | 10 | — | 0,40 |
| 8 | 90 | 4 | 6 | 0,40 |
| 9 | 90 | 5,5 | 4,5 | 0,40 |
| 10 | 95 | 5 | — | 0,20 |
| 11 | 88 | 5,4 | 6,6 | 0,48 |

On introduit également 1 partie de soude.

On porte la température de milieu réactionnel à 75°C et introduit dans l'autoclave le nombre de parties, indiqué dans le tableau 2, de persulfate d'ammonium dissous dans 10 parties d'eau désionisée. On maintient cette température pendant 4 heures, on porte la température à 85°C et la maintient pendant 3 heures puis refroidit jusqu'à la température ambiante. On obtient un latex d'interpolymère selon l'invention.

Le tableau 3 ci-après indique pour chaque exemple la teneur pondérale du latex d'interpolymère en matières sèches, la proportion d'interpolymère insoluble dans l'alcool isopropylique et la teneur pondérale en bis(2-chloroéthyl)vinylphosphonate, présent à l'état greffé, de la partie de l'interpolymère insoluble dans l'alcool isopropylique.

Tableau 3

| Exemple | Teneur pondérale du latex d'interpolymère en matières sèches (%) | Proportion d'inter-polymère insoluble dans l'alcool isopropylique (%) | Teneur pondérale en bis-(2-chloroéthyl)vinylphosphonate, présent à l'état greffé, de la partie de l'interpolymère insoluble dans l'alcool isopropylique (%) |
|---|---|---|---|
| 1 | 47,3 | 92,1 | 1,1 |
| 2 | 47,8 | 90,1 | 4,4 |
| 3 | 47,2 | 96,4 | 1,8 |
| 4 | 47,5 | 94,2 | 2,1 |
| 5 | 47,7 | 92,9 | 2,3 |
| 6 | 47,8 | 94,9 | 3,9 |
| 7 | 49,3 | 92,6 | 7,5 |
| 8 | 49,3 | 89 | 3,5 |
| 9 | 49,1 | 87 | 3,7 |
| 10 | 47,8 | 93,2 | 3,5 |
| 11 | 49,6 | 92,3 | 3,6 |

La proportion d'interpolymère insoluble dans l'alcool isopropylique est déterminée à l'aide de la méthode suivante:

A partir du latex à examiner on prépare sur une plaque de verre un film de 15/100 mm d'épaisseur (mesurée à l'état humide) que l'on fait sécher 2 heures à la température ambiante puis 2 heures à l'étuve à 50°C. On prélève dans ce film un échantillon d'interpolymère de poids Po voisin de 200 mg que l'on place dans sachet fabriqué à partir d'un papier filtre. On suspend le sachet contenant l'interpolymère pendant 7 heures dans de l'alcool isopropylique chauffé à reflux. Après égouttage et essorage du sachet sur papier filtre sec et élimination de l'alcool isopropylique par séjour de l'échantillon d'interpolymère à l'étuve à 110°C pendant 15 heures on détermine le poids P dudit échantillon. La proportion d'interpolymère insoluble dans l'alcool isopropylique est donnée par le rapport $\frac{P}{Po}$ exprimé en pourcentage.

La teneur pondérale en bis(2-chloroéthyl)vinylphosphonate, présent à l'état greffé, de la partie de l'interpolymère insoluble dans l'alcool isopropylique est déterminée par dosage, selon les méthodes d'analyse élémentaire, du phosphore contenu dans ladite partie de l'interpolymère.

On prépare des compositions aqueuses de couchage et applique sur un papier, à l'aide d'une coucheuse à lame d'air, une couche de 20 g/m², exprimée en matières sèches, de chacune desdites compositions. On utilise un papier de 60 g/m². Le papier ainsi couché est séché dans un four tunnel à la température de 120°C puis subit un calandrage consistant en quatre passages successifs entre deux cylindres sous une force de 80 kN par mètre.

Après séchage et calandrage le papier couché est conditionné à la température de 23°C dans une atmosphère à 50% d'humidité relative puis examiné au point de vue résistance à l'arrachage humide. Cette résistance est déterminée à l'aide de l'appareil IGT mis au point par l'»Institut von Grafische Technik«, dans lequel on met en contact un échantillon de papier couché, sur lequel on a au préalable déposé un mince film d'eau, avec une molette encreuse dont on règle la pression sur l'échantillon à une valeur choisie; la vitesse d'impression croît jusqu'à ce qu'on observe un début d'arachage de la couche enduite. La résistance à l'arrachage humide est déterminée visuellement par comparaison avec d'autres échantillons. On utilise l'encre »3801« commercialisée par les Etablissements Lorilleux Lefranc. Les résultats sont exprimés par une note allant de 0 à 10. La résistance à l'arrachage humide est d'autant plus élevée que la note est plus élevée, la note 0 correspondant à un papier présentant une très mauvaise résistance et la note 10 à un papier présentant une excellente résistance.

La mesure est faite immédiatement après préparation du papier couché, d'une part sur échantillon non étuvé et d'autre part sur échantillon étuvé 5 minutes à 110° C.

Le tableau 4 indique la nature et la teneur en poids des constituants solides des compositions de couchage correspondant à chacun des exemples et à chacun des essais comparatifs réalisés en utilisant comme liant le latex du copolymère A correspondant.

Les compositions de couchage sont amenées à un pH de 8,5 par addition d'ammoniaque. Elles sont ajustées par addition d'eau de manière à contenir 60% en poids de matières sèches.

Tableau 4

|  | Essais comparatifs | Exemples 1 à 11 |
|---|---|---|
| Kaolin | 100 | 100 |
| Hexamétaphosphate de sodium | 0,3 | 0,3 |
| Carboxyméthylcellulose | 0,3 | 0,3 |
| Latex de copolymère A | 12 | — |
| Latex d'interpolymère | — | 12 |

Les tableaux 5, 6, 7 et 8 indiquent les valeurs de résistance à l'arrachage humide du papier couché pour chacun des exemples et chacun des essais comparatifs correspondants.

Tableau 5

|  | Résistance à l'arrachage humide | |
|---|---|---|
|  | Echantillon non étuvé | Echantillon étuvé |
| Essai comparatif | 7 | 9 |
| Exemple 1 | 9 | 9 |

Tableau 6

|  | Résistance à l'arrachage humide | |
|---|---|---|
|  | Echantillon non étuvé | Echantillon étuvé |
| Essai comparatif | 4 | 5 |
| Exemple 2 | 9 | 9 |

Tableau 7

| | Résistance à l'arrachage humide | |
| | Echantillon non étuvé | Echantillon étuvé |
| --- | --- | --- |
| Essai comparatif | 3 | 5 |
| Exemple 3 | 4 | 5 |
| Exemple 4 | 6 | 7 |
| Exemple 5 | 7 | 8 |
| Exemple 6 | 7 | 9 |
| Exemple 7 | 5 | 9 |
| Exemple 8 | 6 | 9 |
| Exemple 9 | 5 | 10 |

Tableau 8

| | Résistance à l'arrachage humide | |
| | Echantillon non étuvé | Echantillon étuvé |
| --- | --- | --- |
| Essai comparatif | 3 | 4 |
| Exemple 10 | 7 | 9 |
| Exemple 11 | 8 | 8 |

On voit que les compositions aqueuses contenant comme liants les latex d'interpolymère selon l'invention conduisent à un papier couché présentant une meilleure résistance à l'arrachage humide que le papier couché avec des compositions contenant comme liants les latex des copolymères A correspondants.

Enfin, on a effectué un essai comparatif à l'aide d'un interpolymère ne faisant pas partie de l'invention et constitué du copolymère A des exemples 3 à 9 et du polymère de bis (éthyl) vinylphosphonate. Cet interpolymère est composé de 98% de copolymère A et 2% de polymère de bis (éthyl) vinylphosphonate. Sa préparation a été effectuée selon le mode opératoire décrit dans les exemples ci-dessus. On a ajouté seulement 0,08 partie de persulfate d'ammonium dissous dans 10 parties d'eau désionisée après que la température du milieu réactionnel dans l'autoclave (contenant le latex de copolymère A et du monomère bis (éthyl) vinylphosphonate) a été portée à 75° C.

La teneur pondérale du latex d'interpolymère en matières sèches était de 40% et la proportion d'interpolymère insoluble dans l'alcool isopropylique était de 95,4%. La teneur pondérale en bis(éthyl)vinylphosphonate présent à l'état greffé de la partie de l'interpolymère insoluble dans l'alcool isopropylique, était de 0,16%.

Ce latex d'interpolymère a ensuite été incorporé dans la formule de composition aqueuse de couchage de papier indiquée dans le tableau 4 ci-dessus.

A l'aide de cette composition aqueuse, on a procédé au couchage de papier suivi du séchage à 120° C, calandrage, conditionnement à 23° C dans une atmosphère à 50% d'humidité relative.

Le papier couché a alors été examiné au point de vue de sa résistance à l'arrachage humide. Le tableau 9 suivant rassemble les valeurs de résistance à l'arrachage humide du papier couché au moyen d'une part, de la composition aqueuse renfermant l'interpolymère du copolymère A (des exemples 3 à 9) et du polymère de bis(éthyl)vinylphosphonate et, d'autre part, à titre indicatif, au moyen de la composition aqueuse renfermant le copolymère A seul.

Tableau 9

| | Echantillon non étuvé | Echantillon étuvé |
|---|---|---|
| Composition aqueuse renfermant le latex de copolymère A | 3 | 5 |
| Composition aqueuse renfermant un latex d'interpolymère du copolymère A et du polymère de bis(éthyl)vinylphosphonate | 2 | 3 |

On constate que la composition aqueuse couchage à l'interpolymère renfermant le polymère de bis (éthyl) vinylphosphonate confère au papier couché une résistance à l'arrachage humide encore plus mauvaise que celle observée avec une composition aqueuse renfermant un latex du copolymère A seul.

## Revendications pour les etats contractants BE, CH/LI, DE, FR GB, IT, LU, NL, SE

1. Interpolymère composé d'un copolymère A comprenant du butadiène et du styrène copolymé-risés, et d'un polymère B vinyl-phosphonique au moins en partie greffé sur le copolymère A, caractérisé en ce que l'interpolymère est un latex et le copolymère A renferme au moins un acide carboxylique insaturé éthylénique copolymérisé avec le butadiène et le styrène, et le polymère B est celui de bis(2-chloroéthyl)vinylphosphonate.

2. Latex selon la revendication 1, caractérisé par le fait que l'interpolymère est composé de 80 à 99% en poids de copolymère A et de 20 à 1% en poids de polymère B.

3. Latex selon l'une quelconque des revendications 1 et 2, caractérisé par le fait que le copolymère A comprend en poids 25 à 55% de butadiène, 35 à 74% de styrène et 1 à 10% d'au moins un acide carboxylique insaturé éthylénique.

4. Latex selon l'une quelconque des revendications 1 à 3, caractérisé par le fait que le polymère B comprend en poids 15 à 100% de bis(2-chloroéthyl)vinylphosphonate et 0 à 85% d'au moins un composé insaturé éthylénique copolymérisable avec le bis(2-chloroéthyl)vinylphosphonate.

5. Latex selon l'une quelconque des revendications 1 à 4, caractérisé par le fait que la partie de l'interpolymère insoluble dans l'alcool isopropylique représente au moins 75% de l'interpolymère et comprend, à l'état greffé, 0,2 à 15% en poids de bis(2-chloroéthyl)vinylphosphonate.

6. Latex selon l'une quelconque des revendications 1 à 5, caractérisés par le fait que l'acide carboxylique est choisi dans le groupe formé par l'acide acrylique, l'acide méthacrylique, l'acide itaconique, l'acide maléique et l'acide fumarique.

7. Latex selon la revendication 4, caractérisé par le fait que le composé copolymérisable avec le bis(2-chloroéthyl)vinylphosphonate est choisi dans le groupe formé par les composés vinylaromatiques, les halogénures de vinyle, les halogénures de vinylidène, les composés diéniques, les esters vinyliques d'acide carboxyliques, les composés acryliques.

8. Latex selon la revendication 7, caractérisé par le fait que le composé copolymérisable avec le bis(2-chloroéthyl)vinylphosphonate est choisi dans le groupe formé par le styrène, 1'$\alpha$-méthylstyrène, le paratertiobutylstyrène, le chlorostyrène, le vinyltoluène, le chlorure de vinyle, le bromure de vinyle, le fluorure de vinyle, le chlorure de vinylidène, le butadiène, l'isoprène, le chloroprène, l'acide acrylique, l'acide méthacrylique, l'acrylamide, le méthacrylamide, le nitrile acrylique, le nitrile méthacrylique, le chloroacrylonitrile, l'acétate de vinyle, les esters de l'acide acrylique, les esters de l'acide méthacrylique.

9. Latex selon la revendication 8, caractérisé par le fait que le composé copolymérisable avec le bis(2-chloroéthyl)vinylphosphonate est choisi dans le groupe formé par l'acrylate de méthyle, l'acrylate d'éthyle, l'acrylate d'hydroxyéthyle, l'acrylate d'hydroxypropyle, l'acrylate de n-butyle, l'acrylate d'isobutyle, le méthacrylate de méthyle, le méthacrylate d'éthyle, le méthacrylate d'hydroxyéthyle, le méthacrylate d'hydroxypropyle, le méthacrylate de n-butyle, le méthacrylate d'isobutyle.

10. Procédé de préparation des latex selon l'une quelconque des revendications 1 à 9, caractérisé par le fait que l'on polymérise en émulsion du butadiène, du styrène et au moins un acide carboxylique inaturé éthylénique copolymérisable pour obtenir un latex de copolymère, puis polymérise, en présence du latex de copolymère, du bis(2-chloroéthyl)vinylphosphonate et éventuellement au moins un composé insaturé éthylénique copolymérisable avec le bis(2-chloroéthyl) vinylphosphonate.

11. Utilisation des latex selon l'une quelconque des revendications 1 à 9 comme liants.

12. Utilisation des latex selon la revendication 11 pour la préparation des compositions aqueuses pour couchage du papier.

**Revendications pour l'état contractant Autriche**

1. Procédé de préparation de latex caractérisé en ce que:

— dans une première étape, on polymérise en émulsion une composition monomère constituée de butadiène, styrène et au moins un acide carboxylique insaturé éthylénique copolymérisable, pour obtenir un latex de copolymère (A);
— puis dans une deuxième étape, on polymérise en présence du latex de copolymère (A) une composition monomère constituée de bis(2-chloroéthyl) vinylphosphonate et éventuellement d'au moins un composé insaturé éthylénique copolymérisable avec le bis(2-chloroéthyl) vinyl-phosphonate.

2. Procédé selon la revendication 1, caractérisé en ce que l'acide carboxylique présent à la première étape est choisi dans le groupe formé par l'acide acrylique, l'acide méthacrylique, l'acide itaconique, l'acide maléique et l'acide fumarique.

3. Procédé selon la revendication 1 ou 2, caractérisé en ce que le comosé copolymérisable avec le bis(2-chloroéthyl)vinylphosphonate à la deuxième étape est choisi dans le groupe formé par les composés vinylaromatiques, les halogénures de vinyle, les halogénures de vinylidène, les composés diéniques, les esters vinyliques d'acide carboxyliques, les composés acryliques.

4. Procédé selon la revendication 3, caractérisé par le fait que le composé copolymérisable avec le bis(2-chloroéthyl)vinylphosphonate est choisi dans le groupe formé par le styrène, l'$\alpha$-méthylstyrène, le paratertiobutylstyrène, le chlorostyrène, le vinyltoluène, le chlorure de vinyle, le bromure de vinyle, le fluorure de vinyle, le chlorure de vinylidène, le butadiène, l'isoprène, le chloroprène, l'acide acrylique, l'acide méthacrylique, l'acrylamide, le méthacrylamide, le nitrile acrylique, le nitrile méthacrylique, le chloroacrylonitrile, l'acétate de vinyle, les esters de l'acide acrylique, les esters de l'acide méthacrylique.

5. Procédé selon la revendication 4, caractérisé par le fait que le composé copolymérisable avec le bis(2-chloroéthyl)vinylphosphonate est choisi dans le groupe formé par l'acrylate de méthyle, l'acrylate d'éthyle, l'acrylate d'hydroxyéthyle, l'acrylate d'hydroxypropyle, l'acrylate de n-butyle, l'acrylate d'isobutyle, le méthacrylate de méthyle, le méthacrylate d'éthyle, le méthacrylate d'hydroxyéthyle, le méthacrylate d'hydroxypropyle, le méthacrylate de n-butyle, le méthacrylate d'isobutyle.

6. Procédé selon l'une quelconque des revendications précédentes, caractérisé en ce que la première étape de polymérisation est réalisée en présence de:

— 25 à 55% en poids de butadiène,
— 35 à 74% en poids de styrène,
— 1 à 10% en poids d'au moins un acide carboxylique insaturé éthylénique

par rapport au poids de la composition monomère à polymériser de la première étape.

7. Procédé selon l'une quelconque des revendications précédentes caractérisé en ce que la deuxième étape de polymérisation est réalisée en présence de:

— d'une quantité de latex de copolymère A correspondant à une quantité de copolymère A représentant de 80 à 99% du poids total de mélange copolymère A + composition monomère à polymériser à la deuxième étape;
— de 20 à 1% en poids de composition monomère à polymériser à la deuxième étape par rapport au poids total du mélange copolymère A + composition monomère à polymériser à la deuxième étape.

8. Procédé selon l'une quelconque des revendications précédentes, caractérisé en ce que la composition monomère à polymériser à la deuxième étape est constitué de 15 à 100% en poids de bis(2-chlo-roéthyl) vinylphosphonate et de 0 à 85% en poids d'au moins un composé insaturé éthylénique copolymérisable avec le bis(2-chloroéthyl)vinylphosphonate.

9. Utilisation des latex obtenus selon le procédé faisant l'objet de l'une quelconque des revendications 1 à 8 comme liants.

10. Utilisation des latex selon la revendication 11 pour la préparation des compositions aqueuses pour couchage du papier.

**Patentansprüche für die Vertragsstaaten: BE, CH/LI, DE, FR, GB, IT, LU, NL, SE**

1. Interpolymer, bestehend aus einem Copolymer A, umfassend copolymerisiertes Butadien und Styrol, und aus einem Vinylphosphonsäure-Polymeren B, das zumindest teilweise auf das Copolymer A aufgepfropft ist, dadurch gekennzeichnet, daß das Interpolymer ein Latex ist und daß das Copolymer A mindestens eine mit dem Butadien und Styrol copolymerisierte, ethylenisch ungesättigte Carbonsäure enthält und das Polymer B das Polymer von Bis(2-chlorethyl)vinylphosphonat ist.

2. Latex nach Anspruch 1, dadurch gekennzeichnet, daß das Interpolymer aus 80 bis 99 Gew.-% Copolymer A und aus 20 bis 1 Gew.-% Polymer B besteht.

3. Latex nach Anspruch 1 oder 2, dadurch gekennzeichnet, daß das Copolymer A 25 bis 55% Butadien (Einheiten), 35 bis 74% Styrol (Einheiten) und 1 bis 10 % (Einheiten) mindestens einer ethylenisch ungesättigten Carbonsäure umfaßt.

4. Latex nach einem der Ansprüche 1 bis 3, dadurch gekennzeichnet, daß das Polymer B 15 bis 100 Gew.-% Bis(2-chlorethyl)vinylphosphonat(-einheiten) und 0 bis 85 Gew.-%(-einheiten) mindestens einer mit dem Bis(2-chlorethyl)vinylphosphonat copolymerisierbaren, ethylenisch ungesättigten Verbindung enthält.

5. Latex nach einem der Ansprüche 1 bis 4, dadurch gekennzeichnet, daß der in Isopropylalkohol unlösliche Teil des Interpolymeren mindestens 75% des Interpolymeren ausmacht und aufgepfropft 0,2 bis 15 Gew.-% Bis(2-chlorethyl)vinylphosphonat(-einheiten) umfaßt.

6. Latex nach einem der Ansprüche 1 bis 5, dadurch gekennzeichnet, daß die Carbonsäure aus der Gruppe, bestehend aus Acrylsäure, Methacrylsäure, Itaconsäure, Maleinsäure und Fumarsäure ausgewählt ist.

7. Latex nach Anspruch 4, dadurch gekennzeichnet, daß die mit Bis(2-chlorethyl)vinylphosphonat copolymerisierbare Verbindung aus der Gruppe, bestehend aus vinylaromatischen Verbindungen, Vinylhalogeniden, Vinylidenhalogeniden, Dienverbindungen, Vinylester von Carbonsäuren und Acrylverbindungen ausgewählt ist.

8. Latex nach Anspruch 7, dadurch gekennzeichnet, daß die mit Bis(2-chlorethyl)vinylphosphonat copolymerisierbare Verbindung aus der Gruppe, bestehend aus Styrol, $\alpha$-Methylstyrol, p-tert.-Butylstyrol, Chlorstyrol, Vinyltoluol, Vinylchlorid, Vinylbromid, Vinylfluorid, Vinylidenchlorid, Butadien, Isopren, Chloropren, Acrylsäure, Methacrylsäure, Acrylamid, Methacrylamid, Acrylnitril, Methacrylnitril, Chloracrylnitril, Vinylacetat, Acrylsäureestern und Methacrylsäureestern ausgewählt ist.

9. Latex nach Anspruch 8, dadurch gekennzeichnet, daß die mit Bis(2-chlorethyl)vinylphosphonat copolymerisierbare Verbindung aus der Gruppe, bestehend aus Methylacrylat, Ethylacrylat, Hydroxyethylacrylat, Hydroxypropylacrylat, n-Butylacrylat, Isobutylacrylat, Methylmethacrylat, Ethylmethacrylat, Hydroxyethylmethacrylat, Hydroxypropylmethacrylat, n-Butylmethacrylat und Isobutylmethacrylat ausgewählt ist.

10. Verfahren zur Herstellung der Latices nach einem der Ansprüche 1 bis 9, dadurch gekennzeichnet, daß man in Emulsion Butadien, Styrol und mindestens eine copolymerisierbare, ethylenisch ungesättigte Carbonsäure polymerisiert, um einen Copolymerlatex zu erhalten, und dann in Gegenwart es Copolymerlatex Bis(2-chlorethyl)vinylphosphonat und gegebenenfalls mindestens eine mit dem Bis(2-chlorethyl)vinylphosphonat copolymerisierbare, ethylenisch ungesättigte Verbindung polymerisiert.

11. Verwendung der Latices nach einem der Ansprüche 1 bis 9 als Bindemittel.

12. Verwendung der Latices nach Anspruch 11 zur Herstellung von wäßrigen Mitteln zum Streichen von Papier.

**Patentansprüche für den Vertragsstaat AT**

1. Verfahren zur Herstellung von Latices, dadurch gekennzeichnet, daß man

— in einer ersten Stufe in Emulsion einen Monomerenansatz, bestehend aus Butadien, Styrol und mindestens einer copolymerisierbaren, ethylenisch ungesättigten Carbonsäure polymerisiert, um einen Latex eines Copolymeren (A) zu erhalten,
— dann in einer zweiten Stufe in Gegenwart des Latex des Copolymeren (A) einen Monomerenansatz, bestehend aus Bis(2-chlorethyl)vinylphosphonat und gegebenenfalls mindestens einer mit dem Bis(2-chlorethyl)vinylphosphonat copolymerisierbaren ethylenisch ungesättigten Verbindung, polymerisiert.

2. Verfahren nach Anspruch 1, dadurch gekennzeichnet, daß die in der ersten Stufe vorhandene Carbonsäure aus der Gruppe, bestehend aus Acrylsäure, Methacrylsäure, Itaconsäure, Maleinsäure und Fumarsäure ausgewählt wird.

3. Verfahren nach Anspruch 1 oder 2, dadurch gekennzeichnet, daß die in der zweiten Stufe mit Bis(2-chlorethyl)vinylphosphonat copolymerisierbare Verbindung aus der Gruppe, bestehend aus den vinylaromatischen Verbindungen, Vinylhalogeniden, Vinylidenhalogeniden, Dienverbindungen, Vinylestern von Carbonsäuren und Acrylverbindungen ausgewählt wird.

4. Verfahren nach Anspruch 3, dadurch gekennzeichnet, daß die mit Bis(2-chlorethyl)vinylphosphonat copolymerisierbare Verbindung aus der Gruppe, bestehend aus Styrol, $\alpha$-Methylstyrol, p-tert.-Butylstyrol, Chlorstyrol, Vinyltoluol, Vinylchlorid, Vinylbromid, Vinylfluorid, Vinylidenchlorid, Butadien, Isopren, Chloropren, Acrylsäure, Methacrylsäure, Acrylamid, Methacrylamid, Acrylnitril, Methacrylnitril, Chloracrylnitril, Vinylacetat, Acrylsäureestern und Methacrylsäureestern ausgewählt wird.

5. Verfahren nach Anspruch 4, dadurch gekennzeichnet, daß die mit Bis(2-chlorethyl)vinylphosphonat copolymerisierbare Verbindung aus der Gruppe, bestehend aus Methylacrylat, Ethylacrylat, Hydroxyethylacrylat, Hydroxypropylacrylat, n-Butylacrylat, Isobutylacrylat, Methylmethacrylat, Ethylmethacrylat, Hydroxyethylmethacrylat, Hydroxypropylmethacrylat, n-Butylmethacrylat und Isobutylmethacrylat ausgewählt wird.

6. Verfahren nach einem der vorangehenden Ansprüche, dadurch gekennzeichnet, daß die erste Polymerisationsstufe in Gegenwart von

— 25 bis 55 Gew.-% Butadien,
— 35 bis 74 Gew.-% Styrol,
— 1 bis 10 Gew.-% mindestens einer ethylenisch ungesättigten Carbonsäure,

bezogen auf das Gewicht des Monomerenansatzes, der in der ersten Stufe polymerisiert werden soll, durchgeführt wird.

7. Verfahren nach einem der vorangehenden Ansprüche, dadurch gekennzeichnet, daß die zweite Polymerisationsstufe in Gegenwart von

— einer Menge Latex des Copolymeren (A) entsprechend einer Menge des Copolymeren (A), die 80 bis 99% des Gesamtgewichtes des Gemisches aus Copolymer (A) + Monomerenansatz, der in der zweiten Stufe polymerisiert werden soll ausmacht, und
— 20 bis 1 Gew.-% Monomerenansatz, der in der zweiten Stufe polymerisiert werden soll, bezogen auf das Gesamtgewicht des Gemisches aus Copolymer (A) + Monomerenansatz, der in der zweiten Stufe polymerisiert werden soll, durchgeführt wird.

8. Verfahren nach einem der vorangehenden Ansprüche, dadurch gekennzeichnet, daß der Monomerenansatz, der in der zweiten Stufe polymerisiert werden soll, aus 15 bis 100 Gew.-% Bis(2-chlorethyl)vinylphosphonat und 0 bis 85 Gew.-% mindestens einer mit dem Bis(2-chlorethyl)vinylphosphonat copolymerisierbaren, ethylenisch ungesättigten Verbindung besteht.

9. Verwendung der nach dem Verfahren gemäß einem der Ansprüche 1 bis 8 erhaltenen Latices als Bindemittel.

10. Verwendung der Latices nach Anspruch 11 für die Herstellung von wäßrigen Mitteln zum Streichen von Papier.

**Claims for the contracting States: BE, CH/LI, DE, FR, GB, IT, LU, NL, SE**

1. Interpolymer composed of a copolymer A comprising copolymerised butadiene and styrene, and a vinyl-phosphonate polymer B at least partially grafted onto the copolymer A, characterised in that the interpolymer is a latex and the copolymer A contains at least one ethylenically unsaturated carboxylic acid copolymerised with butadiene and styrene, whilst the polymer B is a polymer of bis-(2-chloroethyl)-vinyl-phosphonate.

2. Latex according to Claim 1, characterised in that the interpolymer is composed of 80 to 99% by weight of copolymer A and of 20 to 1% by weight of polymer B.

3. Latex according to either one of Claims 1 and 2, characterised in that the copolymer A comprises 25 to 55% by weight of butadiene, 35 to 74% by weight of styrene and 1 to 10% by weight of at least one ethylenically unsaturated carboxylic acid.

4. Latex according to any one of Claims 1 to 3, characterised in that the polymer B comprises 15 to 100% by weight of bis-(2-chloroethyl)-vinyl-phosphonate and 0 to 85% by weight of at least one ethylenically unsaturated compound coplymerisable with the bis-(2-chloroethyl)-vinyl-phosphonate.

5. Latex according to any one of Claims 1 to 4, characterised in that the part of the interpolymer which is insoluble in isopropyl alcohol represents at least 75% of the interpolymer and contains 0.2 to 15% by weight of bis-(2-chloroethyl)-vinyl-phosphonate in the grafted state.

6. Latex according to any one of Claims 1 To 5, characterised in that the carboxylic acid is chosen from the group consisting of acrylic acid, methacrylic acid, itaconic acid, maleic acid and fumaric acid.

7. Latex according to Claim 4, characterised in that the compound copolymerisable with the bis-(2-chloroethyl)-vinyl-phosphonate is chosen from the group consisting of vinylaromatic compounds, vinyl halides, vinylidene halides, diene compounds, vinyl esters of carboxylic acids and acrylic compounds.

8. Latex according to Claim 7, characterised in that the compound copolymerisable with bis-(2-chloroethyl)-vinyl-phosphonate is chosen from the group consisting of styrene, α-methylstyrene, para-tertiary butyl-styrene, chlorostyrene, vinyltoluene, vinyl chloride, vinyl bromide, vinyl fluoride, vinylidene chloride, butadiene, isoprene, chloroprene, acrylic acid, methacrylic acid, acrylamide, methacrylamide, acrylonitrile, methacrylonitrile, chloroacrylonitrile, vinyl acetate, acrylic acid esters and methacrylic acid esters.

9. Latex according to Claim 8, characterised in that the compound copolymerisable with bis-(2-chloroethyl)-vinyl-phosphonate is chosen from the group consisting of methyl acrylate, ethyl acrylate, hydroxyethyl acrylate, hydroxypropyl acrylate, n-butyl acrylate, isobutyl acrylate, methyl methacrylate, ethyl methacrylate, hydroxyethyl methacrylate, hydroxypropyl methacrylate, n-butyl methacrylate and isobutyl methacrylate.

10. Process for the preparation of the latices according to any one of Claims 1 to 9, characterised in that butadiene, styrene and at least one copolymerisable ethylenically unsaturated carboxylic acid are polymerised in emulsion to give a copolymer latex, after which bis-(2-chloroethyl)-vinyl-phosphonate and, optionally, at least one ethylenically unsaturated compound copolymerisable with bis-(2-chloroethyl)-vinyl-phosphonate, are polymerised in the presence of the copolymer latex.

11. Use of latices according to any one fo Claims 1 to 9 as binders.

12. Use of the latices according to Claim 11 for the preparation of aqueous compositions for paper coating.


## Claims for the contracting State AT

1. Process for the preparation of a latex, characterised in that:

— in a first step, a monomer composition consisting of butadiene, styrene and at least one copolymerisable ethylenically unsaturated carboxylic acid are polymerised in emulsion to give a copolymer latex (A);

— after which, in a second step, a monomer composition consisting of bis-(2-chloroethyl)-vinyl-phosphonate and, optionally, at least one ethylenically unsaturated compound copolymerisable with bis-(2-chloroethyl)-vinyl-phosphonate, are polymerised in the presence of copolymer latex (A).

2. Process according to Claim 1, characterised in that the carboxylic acid present in the first step is chosen from the group consisting of acrylic acid, methacrylic acid, itaconic acid, maleic acid and fumaric acid.

3. Process according to Claim 1 or 2, characterised in that the compound copolymerisable with the bis-(2-chloroethyl)-vinyl-phosphonate in the second step is chosen from the group consisting of vinylaromatic compounds, vinyl halides, vinylidene halides, diene compounds, vinyl esters of carboxylic and acrylic compounds.

4. Process according to Claim 3, characterised in that the compound copolymerisable with the bis-(2-chloroethyl)-vinyl-phosphonate is chosen from the group consisting of styrene, α-methylstyrene, para-tertiary butylstyrene, chlorostyrene, vinyltoluene, vinyl chloride, vinyl bromide, vinyl fluoride, vinylidene chloride, butadiene, isoprene, chloroprene, acrylic acid, methacrylic acid, acrylamide, methacrylamide, acrylonitrile, methacrylonitrile, chloroacrylonitrile, vinyl acetate, acrylic acid esters and methacrylic acid esters.

5. Process according to Claim 4, characterised in that the compound copolymerisable with bis-(2-chloroethyl)-vinyl-phosphonate is chosen from the group consisting of methyl acrylate, ethyl acrylate, hydroxyethyl acrylate, hydroxypropyl acrylate, n-butyl acrylate, isobutyl acrylate, methyl methacrylate, ethyl methacrylate, hydroxyethyl methacrylate, hydroxypropyl methacrylate, n-butylmethacrylate and isobutyl methacrylate.

6. Process according to any one of the preceding claims, characterised in that the first polymerisation step is carried out in the presence of: 25 to 55% by weight of butadiene, 35 to 74% by weight of styrene and 1 to 10% by weight of at least one ethylenically unsaturated carboxylic acid, the weights being relative to the weight of the monomer composition to be polymerised in the first step.

7. Process according to any one of the preceding claims, characterised in that the second polymerisation step is carried out in the presence of:

— a quantity of copolymer latex A corresponding to a quantity of copolymer A representing from 80 to 99% of the total weight of the mixture of copolymer A + the monomer composition to be polymerised in the second step;

— from 20 to 1% by weight of monomer composition to be polymerised in the second step relative to the total weight of the mixture of copolymer A + the monomer composition to be polymerised in the second step.

8. Process according to any one of the preceding claims, characterised in that the monomer composition to be polymerised in the second step comprises 15 to 100% by weight of bis-(2-chloroethyl)-vinyl-phosphonate and 0 to 85% by weight of at least one ethylenically unsaturated compound copolymerisable with the bis-(2-chloroethyl)-vinyl-phosphonate.

9. Use of the latices obtained according to the process forming the subject of any one of Claims 1 to 8 as binders.

10. Use of the latices according to Claim 9 for the preparation of aqueous compositions for paper coating.